# EUROPÄISCHE PATENTSCHRIFT

(11) **EP 2 982 490 B1**
(45) Veröffentlichungstag und Bekanntmachung des Hinweises auf die Patenterteilung: **15.01.2020**
(21) Anmeldenummer: 15177565.7
(22) Anmeldetag: 20.07.2015
(51) Int. Cl.: B29C 65/00, F03D 1/06, F16B 11/00

(54) **VERFAHREN ZUR MONTAGE EINES VORTEXGENERATORS SOWIE EINE MONTAGEVORRICHTUNG ZUR DURCHFÜHRUNG DES VERFAHRENS**
METHOD FOR MOUNTING A VORTEX GENERATOR AND A MOUNTING DEVICE FOR CARRYING OUT THE METHOD
PROCEDE DE MONTAGE D'UN GENERATEUR VORTEX ET DISPOSITIF DE MONTAGE DESTINE A L'EXECUTION DU PROCEDE

(30) Priorität: 08.08.2014 DE 102014111340
(43) Veröffentlichungstag der Anmeldung: 10.02.2016
(73) Patentinhaber: Senvion GmbH, 22297 Hamburg (DE)
(72) Erfinder: WINDBICHLER, Ralph, 24782 Büdelsdorf (DE)
(74) Vertreter: Groth, Wieland

(56) Entgegenhaltungen:
- EP-A1- 0 353 510
- DE-A1- 4 416 884
- DE-A1- 10 000 355
- DE-A1- 10 155 312
- DE-A1-102010 042 327

## Beschreibung

Die Erfindung betrifft ein Verfahren zur Befestigung eines Anbauteils an einer Klebefläche eines Rotorblatts. Die Erfindung betrifft auch eine Montagevorrichtung zur Durchführung des erfindungsgemäßen Verfahrens.

Verfahren zur Befestigung von Anbauteilen an einem Rotorblatt sind im Stand der Technik natürlich hinlänglich bekannt. Insbesondere ist es auch bekannt, Vortexgeneratoren an einem Rotorblatt einer Windenergieanlage zu befestigen.

Auf ein Rotorblatt müssen, je nach Typ des Rotorblattes, unterschiedliche Anbauteile noch während des Herstellungsverfahrens oder auch auf der Baustelle angebracht werden. Bei diesen Anbauteilen handelt es sich beispielsweise um Regenabweiser, Vortexgeneratoren oder sogenannte Stall-Strips. Sogenannte Stall-Strips werden an der Rotorblattnase angebracht. Sie bewirken ein früheres Einsetzen der Strömungsablösung des um das Rotorblatt strömenden Luftstromes. Dadurch kann die maximale Leistungsaufnahme der Windenergieanlage begrenzt werden.

Bei Vortexgeneratoren hingegen handelt es sich in der Regel um im Querschnitt dreieckförmige Flügel, die von einer Saugseite der Rotorblattaußenhaut im Wesentlichen senkrecht abstehen. Das Dreieck ist zur Rotorblatthinterkante hin rechtwinkelig mit einer senkrecht abfallenden Dreieckseite und zur Rotorblattnase hin spitzwinkelig abfallend ausgebildet. Vortexgeneratoren können zueinander schräg oder exakt parallel zueinander zur Luftstromrichtung auf der Rotorblattaußenhaut angeordnet sein. Bei Umströmung des Rotorblattes erzeugt jeder Vortexgenerator stromabwärts einen Wirbel, der sich stromabwärts von der senkrechten Kante des Vortexgenerators löst. Diese Wirbel oder auch Vortices genannt, verhindern das Ausbilden einer zu starken und zu dicken turbulenten Grenzschicht zwischen der Außenhaut des Rotorblattes und der das Rotorblatt umströmenden laminaren Luftströmung. Dadurch wird einem Abreißen oder Ablösen der laminaren Strömung vom Rotorblatt entgegengewirkt, und es können höhere und stärkere Auftriebskräfte am Rotorblatt wirken und sich ausbilden.

Welches Anbauteil auch immer an das Rotorblatt angebracht werden muss, ist es in der Regel immer von Wichtigkeit, dass die Montage möglichst schnell und zuverlässig erfolgt und dass das Anbauteil dauerhaft mit dem Rotorblatt verklebt wird.

Gemäß dem Stand der Technik werden die Anbauteile mit verschiedenen Verklebungen oder Verschraubungen oder auch Nieten am Rotorblatt befestigt. Zur Herstellung der Klebverbindung werden die beiden Klebeflächen des Anbauteils und des Rotorblattes vorab mit dem Kleber bestrichen und das Anbauteil wird so lange am Rotorblatt fixiert gehalten, bis der Kleber ausgehärtet ist oder zumindest genügend Festigkeit besitzt, damit das Rotorblatt nicht mehr verrutschen und/oder abfallen kann. Zur Herstellung der Klebverbindung werden insbesondere Epoxidharzkleber, PU-Kleber, das sind Klebstoffe, die auf Polyurethan basieren, MA-Kleber, das sind Kleber, die auf Methacrylat basieren, verwendet.

Es hat sich gezeigt, dass die genannten Verbindungen nicht dauerhaft sind. Die Anbauteile müssen von Zeit zu Zeit vollständig abgelöst und neu angeklebt werden. Zur Verlängerung der Standzeiten ist es zwar möglich, Kleber mit langen Fixier- und Aushärtezeiten zu verwenden, dieses hat jedoch den erheblichen Nachteil, dass die Anbauteile während des Klebevorganges lange fixiert gehalten werden müssen. Es hat sich auch gezeigt, dass es in der Praxis schwierig ist, zwei Klebeflächen homogen mit Klebstoff zu bestreichen, da das Auftreten von Lufteinschlüssen, Luftblasen u. Ä. in erheblichem Maße auftritt.

In der DE 10 2010 042 327 A1 ist ein Verfahren zur Fertigung eines Rotorblattes einer Windenergieanlage offenbart, bei dem ein Hauptgurt auf die Innenseite einer Rotorblatthalbschale aufgeklebt wird und ein zwischen dem Hauptgurt und der Innenseite der Rotorblatthalbschale ausgebildeter Fügespalt an einer Seite abgedichtet wird und über die andere offene Seite Klebstoff injiziert wird.

In der DE 44 16 884 A1 ist eine Vorrichtung zur Befestigung eines Solargeneratormoduls auf einer Unterkonstruktion beschrieben.

In der EP 0 353 510 A1 wiederum ist ein Verfahren und eine Vorrichtung zum Ankleben eines Griffes an einen Geschirrteil offenbart.

In der DE 100 00 355 A1 ist eine Vorrichtung zum Setzen und Ankleben von Halteelementen auf Tragflächen beschrieben. Dabei wird ein Halteelement, das mit einer Klebefläche versehen ist, mittels der Vorrichtung positioniert und angedrückt.

Es ist daher Aufgabe der vorliegenden Erfindung, ein eingangs genanntes Verfahren zur Befestigung eines Anbauteils an einem Rotorblatt zur Verfügung zu stellen, das eine dauerhafte Klebverbindung hervorbringt und bei dem der Monteur das Anbauteil dennoch nicht lange fixiert halten muss. Es ist auch Aufgabe der vorliegenden Erfindung, eine Montagevorrichtung zur Verfügung zu stellen, die die Durchführung eines derartigen Verfahrens ermöglicht.

Die Aufgabe wird in ihrem ersten Aspekt durch ein Verfahren mit den Merkmalen des Anspruchs 1 gelöst.

Das erfindungsgemäße Verfahren eignet sich insbesondere zur Befestigung eines Anbauteils an einem Rotorblatt.

Erfindungsgemäß werden das Rotorblatt mit einer Klebefläche und das Anbauteil mit einer korrespondierenden Klebefläche versehen. Das Befestigungsverfahren ist im Kern ein Klebverfahren. Zur Befestigung werden die Klebefläche und die korrespondierende Klebefläche aneinandergesetzt, ohne sich jedoch dabei vollflächig zu berühren. Erfindungsgemäß ist ein Spalt zwischen der Klebefläche und der korrespondierenden Klebefläche ausgebildet, der die größte Fläche der Klebefläche ausmacht. Das Anbauteil wird mit seiner Klebefläche gegen die korrespondierende Klebefläche gepresst, um zumindest eine Zeitlang eine fixierte Position beizubehalten. Gleichzeitig wird Klebstoff in den Spalt injiziert. Das Anbauteil wird so lange gegen das Rotorblatt gepresst, bis der Klebstoff vollständig abgebunden ist oder zumindest soweit abgebunden ist, bis das Anbauteil mit dem Rotorblatt eine feste Klebverbindung ausbildet. Zum Anpressen kann ein Klebeband verwendet werden.

Zur Durchführung des erfindungsgemäßen Verfahrens wird das Anbauteil mit Öffnungen versehen, die eine klebstoffleitende Verbindung zu der korrespondierenden Klebefläche aufweisen. Erfindungsgemäß wird der vorzugsweise flüssige Klebstoff durch die Öffnungen des Anbauteils zu dessen korrespondierender Klebefläche geleitet. Von dort gelangt der flüssige Klebstoff in den Spalt und füllt den Spalt zwischen Klebefläche und korrespondierender Klebefläche vollständig und vorzugsweise luft- und blasenfrei aus. Wenn der Spalt vollständig luft- und blasenfrei mit Klebstoff ausgefüllt ist, wird die Zufuhr von Klebstoff gestoppt, und der Klebstoff beginnt auszuhärten und eine feste Klebverbindung zwischen Anbauteil und Rotorblatt herzustellen.

Erfindungsgemäß ist der Spalt zwischen der Klebefläche und der korrespondierenden Klebefläche umlaufend klebstoffdicht abgeschlossen. Der Spalt erstreckt sich günstigerweise beinahe über die gesamte Ausdehnung der Klebefläche und der mit ihr korrespondierenden Klebefläche. Günstigerweise ist an den Rändern der Klebefläche eine Dichtung vorgesehen, die den Spalt günstigerweise klebstoffdicht, vorzugsweise luftdicht gegen die Umgebung abdichtet. Dadurch wird der in den Spalt geleitete flüssige Klebstoff am Austreten aus dem Spalt gehindert.

Bei dieser Variante des Verfahrens ist die korrespondierende Klebefläche günstigerweise umlaufend mit einem doppelseitigen Haftklebeband beklebt, und die mit dem doppelseitigen Klebeband versehene Klebefläche des Anbauteils wird auf die korrespondierende Klebefläche angesetzt, und es bildet sich durch die Haftklebeverbindung des doppelseitigen Haftklebebandes zwischen Klebefläche und korrespondierender Klebefläche die klebstoffdichte Dichtung aus, die den Spalt umlaufend abdichtet. Beim Aufbringen des doppelseitigen Haftklebebandes auf das Anbauteil ist darauf zu achten, dass Abschnitte des Klebebandes, die von einer Rolle abgeschnitten werden, ohne Überlappungen oder Stufen, sondern aneinander auf Stoß geklebt werden, um einen die gesamte korrespondierende Klebefläche in gleicher Höhe und ohne Lücken umlaufenden Haftklebebandstreifen auszubilden. Nach dem Aufbringen des Haftklebebandes auf die korrespondierende Klebefläche entlang deren gesamten Umfanges wird eine Schutzfolie der freien Seite des Haftklebebandes abgezogen, und das Anbauteil wird exakt positioniert gegen die Klebefläche des Rotorblatts gedrückt.

Das Haftklebeband hat zum einen die Funktion, dass es das Anbauteil zumindest kurzzeitig an dem Rotorblatt fixiert, um den eigentlichen Klebvorgang durch Injektion des flüssigen Klebstoffes bei einer stabilisierten relativen Anordnung zu ermöglichen, zum anderen erzeugt das umlaufende Haftklebeband einen klebstoffdichten Abschluss, der den Spalt nach außen abdichtet und einem Austritt von Klebstoff aus dem Spalt heraus entgegenwirkt.

Erfindungsgemäß werden in das Anbauteil Öffnungen eingebracht, soweit nicht bereits während des Herstellungsverfahrens des Anbauteils Öffnungen in dem Anbauteil vorgesehen werden.

Vorzugsweise werden die der korrespondierenden Klebefläche gegenüberliegenden Bereiche einer Außenwandung des Anbauteils mit einem Schutzband abgedeckt, und die Öffnungen werden durch das jeweilige Schutzband hindurch in das Anbauteil eingebracht. Dabei wird das Schutzband vorzugsweise nur über Austrittsöffnungen angeordnet; Eintrittsöffnungen können, müssen aber nicht mit dem Schutzband abgedeckt werden.

Günstigerweise verhindern die Schutzbänder einen direkten Kontakt der Außenwandung des Anbauteils mit überschüssigem, in den Spalt eingebrachtem und aus den Austrittsöffnungen und ggf. auch der Eintrittsöffnung heraustretendem Klebstoff. Die Schutzbänder können nach dem Eindringen des Klebstoffs in den Spalt und dessen geringfügigem Austreten aus den Austrittsöffnungen wieder von der Außenwand abgezogen werden und hinterlassen eine klebstofffreie Außenwandung des Anbauteils.

Zur Herstellung einer festen Klebverbindung zwischen Anbauteil und Rotorblatt ist es notwendig, dass das Anbauteil nicht nur fixiert an dem Rotorblatt gehalten wird, sondern auch angepresst wird. Erfindungsgemäß wird ein Anpresswerkzeug vorübergehend an oder über dem Anbauteil angeordnet, das sich an einer Außenwandung der Einrichtung ansaugt und das Anbauteil an die Außenwandung des Rotorblatts drückt. Bei dem Rotorblatt kann es sich um eine Windenergieanlage, insbesondere um ein Rotorblatt handeln.

Um den Anpressvorgang des Anbauteils an das Rotorblatt zu ermöglichen, berührt das Anpresswerkzeug das Anbauteil vorzugsweise an dessen umlaufendem Rand und drückt den umlaufenden Rand an die korrespondierende Klebefläche der Einrichtung, insbesondere des Rotorblattes. Das Anbauteil ist in der Regel elastisch. Dennoch ist es hinreichend, zur Erzeugung eines genügend großen Anpressdruckes des Anbauteils an die Einrichtung, das Anbauteil an einem umlaufenden Rand anzudrücken. Durch den Anpressdruck entlang des umlaufenden Randes kann der Rand auf der Einrichtung nicht verrutschen, und das Anbauteil behält seine Ursprungsform während des Verfahrens im Wesentlichen oder vollständig bei.

Günstigerweise wird Klebstoff durch wenigstens eine der Öffnungen in den Spalt eingepresst. Dazu ist eine Injektionsvorrichtung vorgesehen, die mit der wenigstens einen Einlassöffnung in Verbindung steht und flüssigen Klebstoff unter Druck durch die wenigstens eine Einlassöffnung in den Spalt einpresst. Es können genau eine oder zwei oder auch jede höhere Anzahl an Einlassöffnungen vorliegen. Der Druck kann mittels einer Klebstoffpumpe, beispielsweise in Form eines verfahrbaren Kolbens, aufgebaut werden. Der unter Druck durch die wenigstens eine Einlassöffnung eingebrachte Klebstoff verteilt sich im Spalt zwischen Klebefläche und korrespondierender Klebefläche und tritt aus der wenigstens einen Auslassöffnung wieder aus dem Spalt aus. Es wird so lange Klebstoff in den Spalt eingepresst, bis aus allen Austrittsöffnungen zumindest etwas Klebstoff ausgetreten ist, wodurch visuell kontrolliert werden kann, dass der gesamte Spalt mit Klebstoff gefüllt ist. Dadurch wird eine vollflächige Klebverbindung ohne Lufteinschluss zwischen Anbauteil und Einrichtung ermöglicht. Dies erspart aufwendige Prüfverfahren.

In einer anderen Variante des Injektionsverfahrens für den Klebstoff wird durch wenigstens eine der Öffnungen ein Unterdruck in dem Spalt erzeugt und durch wenigstens eine andere Öffnung Klebstoff in den Spalt injiziert. Dabei wird also kein Druck bei der Klebstoffzufuhr aufgebaut, sondern der Klebstoff wird quasi durch Unterdruck im Spalt aus einem Klebstoffreservoir eingesaugt und verteilt sich auch so vollständig im Spalt. Zur Durchführung dieses Verfahrens muss die umlaufende Abdichtung des Spaltes nicht nur klebstoffdicht, sondern auch luftdicht ausgebildet sein.

Vorzugsweise werden die Klebefläche und besonders bevorzugt auch die korrespondierende Klebefläche als Bereiche des Rotorblatts bzw. des Anbauteils vor dem Aufbringen des Klebstoffes an dem Rotorblatt bzw. dem Anbauteil vorbereitet oder präpariert. Insbesondere werden die Bereiche zur Klebfläche bzw. korrespondierenden Klebefläche aufgeraut, um eine möglichst feste Klebverbindung zwischen dem Klebstoff und der jeweiligen Klebefläche herzustellen.

Vorzugsweise werden die Klebefläche und die korrespondierende Klebefläche vor dem Aufbringen des Klebstoffes auch gereinigt.

In ihrem zweiten Aspekt wird die Aufgabe durch eine Montagevorrichtung mit den Merkmalen des Anspruchs 13 erfüllt.

Die erfindungsgemäße Montagevorrichtung umfasst ein Anpresswerkzeug und eine Injektionseinrichtung.

Das Anpresswerkzeug ist zum Anpressen eines Anbauteils mit einer Klebefläche an eine korrespondiere Klebefläche eines Rotorblatts bestimmt. Das Anpresswerkzeug umfasst wenigstens eine Ansaugeinrichtung, mit der das Anpresswerkzeug an einer Wandung des Rotorblatts vorübergehend ansaugbar ist, sowie eine Anpresseinrichtung, mit der das Anbauteil abgedichtet, unter Ausbildung eines Spaltes zwischen der Klebefläche und der korrespondierenden Klebefläche an die korrespondierende Klebefläche angepresst und dadurch gleichzeitig abgedichtet wird. Das Anpresswerkzeug verhindert ein Aufblähen des Rotorblatts durch den eingepressten Klebstoff, und es hält das Anbauteil in seiner Ursprungsform.

Die Montagevorrichtung weist in einer Ausführungsform auch die Injektionseinrichtung für Klebstoff in den Spalt zwischen der Klebefläche und der korrespondierenden Klebefläche auf.

Die gesamte Montagevorrichtung ist zur Durchführung eines der eingangs genannten erfindungsgemäßen Verfahren bestimmt, aber sie ist nicht zum Verbleib am Rotorblatt bestimmt. Sie wird nach der Durchführung des Klebeverfahrens wieder vom Rotorblatt abgenommen und hinterlässt ein fest am Rotorblatt angeklebtes Anbauteil.

Günstigerweise ist die Ansaugeinrichtung als wenigstens ein Saugpad ausgebildet. Bei einem Saugpad handelt es sich um eine ebene, flächig ausgebildete Ansaugfläche, die günstigerweise mit einer Vakuumleitung, vorzugsweise einer Unterdruckleitung in Verbindung steht. Beim Aufsetzen des Saugpads auf eine möglichst ebene und glatte Außenwandung des Rotorblatts wie die Rotorblattaußenhaut wird über die Vakuumleitung ein Unterdruck auf der rotorblattseitigen Auflagefläche des Saugpads erzeugt und das Saugpad durch den sich ausbildenden Unterdruck an die Außenwandung gesaugt.

Vorzugsweise weist das Anpresswerkzeug der Montagevorrichtung zwei oder mehr Saugpads auf, um eine zumindest vorübergehende rutschfeste Verbindung zwischen Montagewerkzeug und Rotorblatt herzustellen, damit das Anbauteil durch das Anpresswerkzeug der Montagevorrichtung fest und fixiert gegen das Rotorblatt gedrückt werden kann.

Von dem Saugpad geht günstigerweise ein Gestänge ab, und an der Saugpadseite des Gestänges ist die Anpresseinrichtung für das Anbauteil vorgesehen.

Vorzugsweise weist die Anpresseinrichtung eine Anpresskuppel mit einer umlaufenden Anpressfläche auf. Dadurch ist es möglich, dass das Anbauteil, bei dem es sich vorzugsweise um die Grundplatte eines Vortexgenerators handelt, entlang seines Umfangs gegen die Außenwandung, vorzugsweise Rotorblattaußenhaut gedrückt wird.

Vorzugsweise weist die Anpresskuppel wenigstens eine Absenkung bis auf Höhe der Anpressfläche der Anpresskuppel auf, die eine Betätigung durch die Absenkung hindurch an dem angedrückten Anbauteil ermöglicht. Bei der Betätigung kann es sich beispielsweise um das Anbringen einer Injektionsnase eines Injektionsschlauches an die wenigstens eine Einlassöffnung des Anbauteils handeln oder auch um das Anbringen von Vakuumleitungen an alle Auslassöffnungen des Anbauteils, um einen Unterdruck im Spalt zwischen korrespondierender Klebefläche und Klebefläche zu erzeugen.

In einer bevorzugten Ausführungsform der erfindungsgemäßen Montagevorrichtung ist die Anpresseinrichtung höhenverstellbar parallel zum Saugpad ausgebildet. Dadurch ist eine nachträgliche Justierung des Anpressdruckes des Anbauteils an dem Rotorblatt möglich.

Die Montagevorrichtung weist günstigerweise eine Injektionseinrichtung mit einer Injektionsnase zum Anschluss für wenigstens eine Einlassöffnung des Anbauteils auf. Die Injektionsnase wird vom Monteur günstigerweise durch eine Absenkung der Anpresskuppel an die wenigstens eine Einlassöffnung angeschlossen. Dazu weist die wenigstens eine Einlassöffnung einen mit der Injektionsnase korrespondierenden Anschluss auf, der eine klebstoffdichte Verbindung ermöglicht.

In einer weiteren günstigen Ausführungsform der Erfindung weist die Injektionseinrichtung eine Vakuumpumpe auf, die an die wenigstens eine, vorzugsweise alle Auslassöffnungen am Rotorblatt anschließbar ist und die einen Unterdruck im Spalt erzeugt.

Die Erfindung wird anhand eines Ausführungsbeispiels in sechs Figuren beschrieben. Dabei zeigen:
- Fig. 1: eine perspektivische Ansicht eines Abschnitts eines Rotorblattes mit einer korrespondierenden Klebefläche,
- Fig. 2a: eine zur Anwendung in einem erfindungsgemäßen Befestigungsverfahren präparierte Grundplatte mit zwei Vortextgeneratoren in einer Draufsicht,
- Fig. 2b: die Grundplatte in Fig. 2a in einer Untenansicht,
- Fig. 3: eine Ansicht des Rotorblattes in Fig. 1 mit angeklebter Grundplatte mit Vortexgeneratoren,
- Fig. 4: eine seitliche Ansicht einer erfindungsgemäßen Montagevorrichtung mit einem Anpresswerkzeug über einer Grundplatte mit Vortexgenerator und Injektionseinrichtung,
- Fig. 5: eine Draufsicht des Anpresswerkzeugs in Fig. 4.

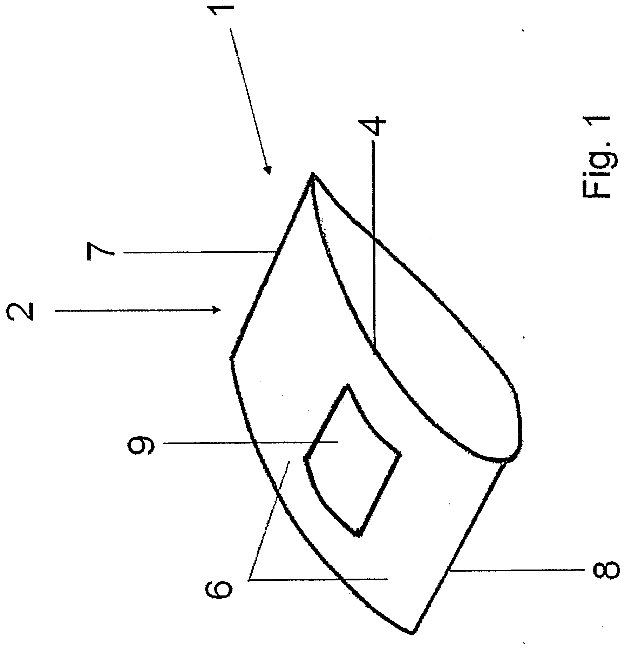

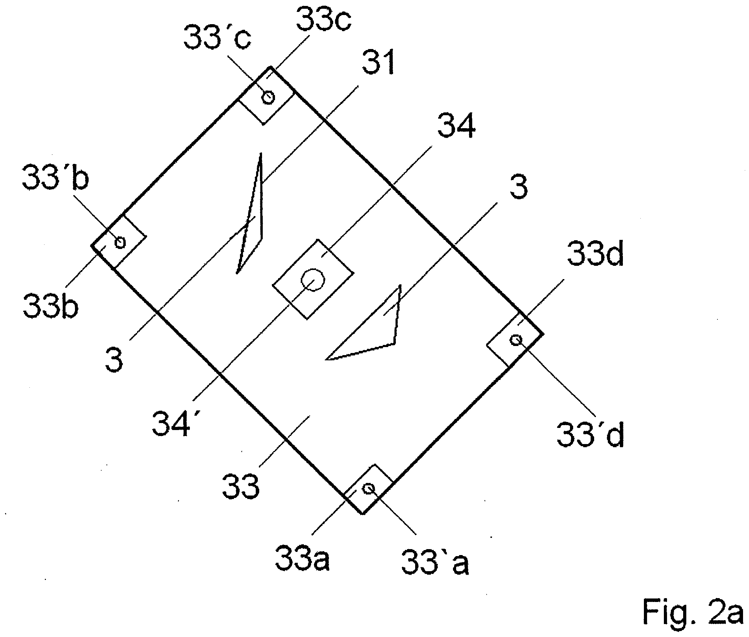

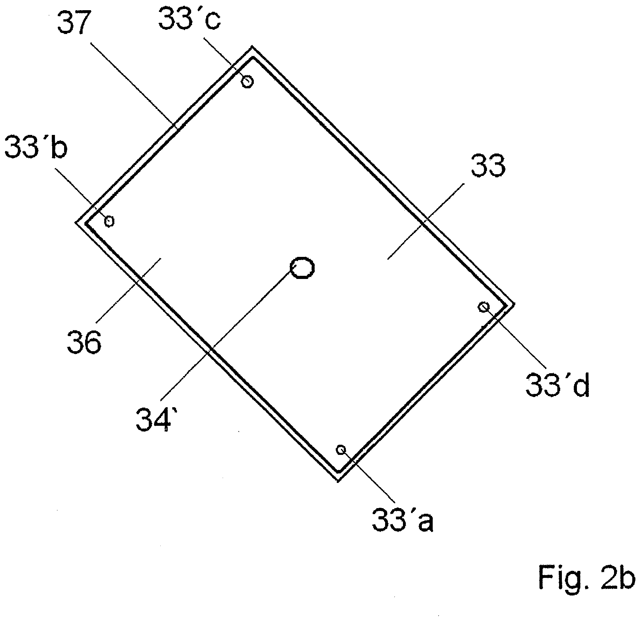

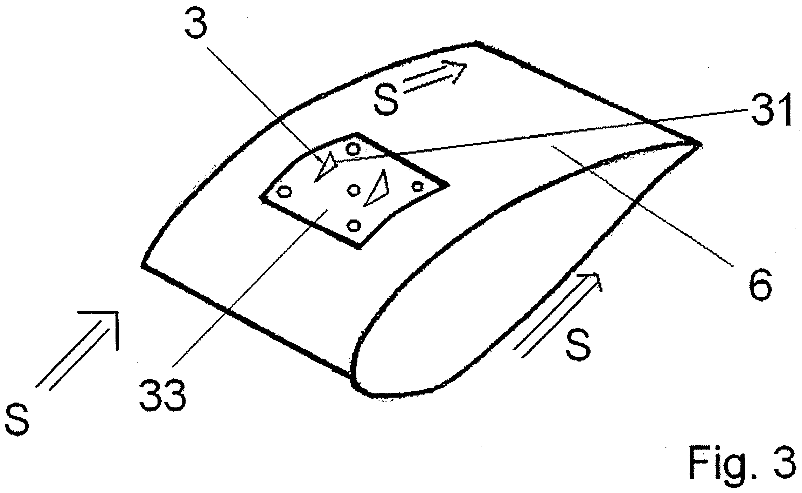

Fig. 1 zeigt einen zur Durchführung des erfindungsgemäßen Verfahrens vorbereiteten Abschnitt eines Rotorblattes 1. Das zu einem Rotorblattabschnitt 2 in Fig. 1 gehörende Rotorblatt 1 ist Teil einer (nicht dargestellten) Windenergieanlage. Es ist bei Windenergieanlagen üblich, zur Erhöhung des Auftriebs des Rotorblattes 1 das Rotorblatt 1 mit Vortexgeneratoren 3 zu versehen. Bei Vortexgeneratoren 3 gemäß Fign. 2a, 2b und Fig. 3 handelt es sich in der Regel um im Querschnitt dreieckförmige Flügel, die von einer Saugseite 4 einer Rotorblattaußenhaut 6 senkrecht abstehen. Der dreieckförmige Flügel ist zu einer Rotorblatthinterkante 7 hin rechtwinkelig mit einer senkrecht abfallenden Dreieckseite 31 und zu einer Rotorblattnase 8 hin spitzwinkelig flach abfallend ausgebildet. Vortexgeneratoren 3 können schräg, wie Fig. 3 zeigt, oder exakt parallel zu einer Luftstromrichtung S auf der Rotorblattaußenhaut 6 angeordnet sein. Bei Umströmung des Rotorblattes 1 erzeugt jeder Vortexgenerator 3 stromabwärts einen Wirbel, der sich stromabwärts von der senkrechten Kante 31 des Vortexgenerators 3 löst. Der Wirbel oder Vortex verhindert das Ausbilden einer zu starken und zu dicken turbulenten Grenzschicht zwischen der Rotorblattaußenhaut 6 des Rotorblattes 1 und der das Rotorblatt 1 umströmenden laminaren Luftströmung S. Dadurch wird einem Abreißen der laminaren Strömung vom Rotorblatt 1 entgegengewirkt, und es können höhere und stärkere Auftriebskräfte am Rotorblatt 1 wirken und sich ausbilden.

Vortexgeneratoren 3 sind häufig in eine Grundplatte 33 gemäß Fign. 2a und 2b integriert. Bei der Anordnung aus Vortexgenerator 3 und Grundplatte 33 handelt es sich gemäß Fign. 2a und 2b um ein integriertes Bauteil, das beispielsweise in einem Spritzgussverfahren aus einem Kunststoff einteilig hergestellt ist.

Die Grundplatte 33 in den Fign. 2a und 2b wird auf eine korrespondierende Klebefläche 9, die in Fig. 1 beabstandet von der Rotorblattnase 8 vorgesehen ist, aufgeklebt. Das Aufkleben geschieht in dem erfindungsgemäßen Verfahren.

In einem ersten Schritt des Verfahrens wird zunächst die korrespondierende Klebefläche 9 der Rotorblattaußenhaut 6 präpariert.

Die korrespondierende Klebefläche 9 wird in einen rauen und sauberen Zustand gebracht. Zur Erzeugung einer hinreichenden Rauigkeit kann die korrespondierende Klebefläche 9 vorab mit Sand entweder abgestrahlt oder abgerieben werden. In einer anderen Variante des Verfahrens wird das Rotorblatt 1 während seiner Herstellung bereits mit einer die Rotorblattaußenhaut 6, insbesondere im Bereich der korrespondierenden Klebefläche 9, umgebenden Schutzfolie gefertigt. Die Schutzfolie wird als erste Lage in eine Fertigungsform einer Rotorblatthalbschale eingebracht, und nachfolgend wird der Laminataufbau über der Schutzfolie in die Rotorblatthalbschale eingebracht. Die fertige Rotorblatthalbschale wird der Fertigungsform entnommen, und die Schutzfolie stellt die äußerste Haut der Rotorblattaußenhaut 6 dar.

Nach Zusammenkleben beider Rotorblatthalbschalen und Fertigstellen des gesamten Rotorblattes 1 kann die Schutzfolie von dem Laminatverbund des Rotorblattes 1 abgezogen werden und hinterlässt die raue und saubere korrespondierende Klebefläche 9. Die Schutzfolie muss dazu direkt vor dem Aufkleben der Grundplatte 33 des Vortexgenerators 3 entfernt werden. Nach dem Entfernen der Schutzfolie darf keine nachträgliche Behandlung der korrespondierenden Klebefläche 9 beispielsweise durch Sand oder andere Verunreinigungen stattfinden. Zwischen der Entfernung der Schutzfolie und dem Aufkleben der Grundplatte 33 auf die korrespondierende Klebefläche 9 darf nicht mehr als eine halbe Stunde liegen, da anderenfalls die von der Schutzfolie befreite korrespondierende Klebefläche 9 bereits mit Staubpartikeln, die in der Umgebungsluft vorhanden sind, kontaminiert ist.

Wenn die korrespondierende Klebefläche 9 nicht mit einer Schutzfolie versehen oder die Schutzfolie vor längerer Zeit entfernt wurde, wird die korrespondierende Klebefläche 9 vor dem eigentlichen Aufkleben der Grundplatte 33 mit Sand behandelt. Dazu wird die korrespondierende Klebefläche 9 mit Sand mit einer Körnung von 80 bis 200 Grit abgestrahlt.

Nach der Sandbehandlung wird die korrespondierende Klebefläche 9 von Staub und anderen Verunreinigungen gesäubert. Die korrespondierende Klebefläche 9 wird beispielsweise mit VHB® Oberflächenreiniger der Firma 3M gereinigt. VHB®-Oberflächenreiniger ist unter dieser Bezeichnung allgemein käuflich erwerbbar.

Es ist alternativ auch möglich, die korrespondierende Klebefläche 9 mit Isopropylalkohol zu reinigen. Aus Sicherheitsgründen kann der Isopropylalkohol mit Wasser gemischt werden, wobei der Isopropylalkohol weniger als 50 Vol. % des Gemisches annimmt.

Nach der Reinigung sollte die Grundplatte 33 höchstens innerhalb einer halben Stunde aufgeklebt werden.

Fign. 2a und 2b zeigen beispielhaft die für das erfindungsgemäße Verfahren bearbeitete herkömmliche Grundplatte 33 mit zwei Vortexgeneratoren 3. Rotorblattabseitig ist auf die Oberseite der Grundplatte 33 zunächst an den vier Ecken je ein Abschnitt eines Schutzbandes 33a, 33b, 33c, 33b und zentral ein Abschnitt eines Schutzbandes 34 aufgeklebt, die nach Beendigung des Befestigungsverfahrens wieder abgezogen werden. Bei den Abschnitten der Schutzbänder 33a, 33b, 33c, 33b, 34 kann es sich jeweils um einen Abschnitt eines einseitig klebenden Klebebandes handeln. Er verbleibt nicht an der Oberseite der Grundplatte 33.

Nach dem Aufkleben der fünf Abschnitte der Schutzbänder 33a, 33b, 33c, 33d, 34 wird durch die fünf Abschnitte der Schutzbänder 33a, 33b, 33c, 33d, 34 und durch die Grundplatte 33 an den vier Ecken und zentral jeweils ein Loch gebohrt. Das Loch ist vorzugsweise kreisrund und durchdringt die Grundplatte 33 jeweils vollständig. Es sind jedoch auch andere Lochquerschnitte denkbar. Eine in Fig. 2a im zentralen Abschnitt des Schutzbandes 34 und in die Grundplatte 33 eingebrachte Einlassöffnung 34' weist einen Durchmesser von 5,5 mm auf und hat zu jeder der vier Ecken einen gleichen Abstand, während vier Auslassöffnungen 33'a, 33'b, 33'c, 33'd, die durch die vier Abschnitte der Schutzbänder 33a, 33b, 33c, 33d und die Ecken der Grundplatte 33 hindurchgebohrt sind, jeweils einen Innendurchmesser von 2,5 mm aufweisen.

Fig. 2b zeigt die Grundplatte 33 mit den beiden Vortexgeneratoren 3 in einer Ansicht von unten. Dabei sind die vier Auslassöffnungen 33'a, 33'b, 33'c, 33'd sowie die zentrale Einlassöffnung 34' zu erkennen, die zentrale Einlassöffnung 34' ist etwa um das Doppelte größer als die vier untereinander gleich großen Auslassöffnungen 33'a, 33'b, 33'c, 33'd der Ecken. Diese fünf Öffnungen 33'a, 33'b, 33'c, 33'd, 34' sind hier als im Querschnitt kreisrunde Bohrungen ausgebildet.

Die Grundplatte 33 wird an ihrer in Fig. 2b dargestellten Unterseite, die als Klebefläche 36 fungiert, umlaufend entlang ihres äußeren Randes mit einem doppelseitigen Klebeband 37 abgeklebt. Es ist beim Aufkleben des doppelseitigen Klebebandes 37 auf den Rand der Klebefläche 36 darauf zu achten, dass das umlaufende doppelseitige Klebeband 37 eben und ohne Stufenbildung die Grundplatte 33 umläuft, da die Klebefläche 36 zur vorläufigen Fixierung der Grundplatte 33 auf der korrespondierenden Klebefläche 9 der Rotorblattaußenhaut 6 mittels des umlaufenden doppelseitigen Klebebandes 37 aufgeklebt wird und das doppelseitige Klebeband 37 im weiteren Verlauf des Verfahrens als Dichtung fungiert. Dabei muss die vorläufige Klebverbindung zwischen der Grundplatte 33 und der Rotorblattaußenhaut 6 in einigen Verfahren klebstoffdicht, in anderen Verfahren aber auch luftdicht erfolgen, so dass das doppelseitige Klebeband 37 sorgfältig und ohne Lücken oder Überlappungen umlaufend entlang des Randes der Unterseite der Grundplatte 33 aufgeklebt wird. Der Abstand der Auslassöffnungen 33'a, 33'b, 33'c, 33'd vom doppelseitigen Klebeband 37 sollte höchstens 5 mm betragen. Als doppelseitiges Klebeband 37 kann ein Acrylschaumstoffklebeband SAFT® 3230 (VHB 4991) der Firma 3M mit einer Dicke von 2,3 mm und einer Breite von 10 mm verwendet werden.

Vor dem Aufbringen des doppelseitigen Klebebandes 37 wurde die Unterseite der Grundplatte 33 ebenfalls mit 3M VHB® Oberflächenreiniger oder Isopropylalkohol gereinigt, wobei auch hier aus Sicherheitsgründen der Isopropylalkohol mit Wasser verdünnt wird, wobei der Isopropylalkohol weniger als 50 Vol. % der Mischung ausmacht. Nachdem die Klebefläche 36 getrocknet ist, wird die Klebefläche 36 mit einem trockenen, sauberen Tuch gereinigt, um Reinigungsrückstände zu entfernen. Nach der Reinigung dürfen weder die Klebefläche 36 der Grundplatte 33 noch die korrespondierende Klebefläche 9 der Rotorblattaußenhaut 6 ohne Handschuhe berührt werden. Die Klebefläche 36 und die korrespondierende Klebefläche 9 sind gleich groß und weisen eine gleiche umlaufende Außenform auf. Sie passen formschlüssig aufeinander.

Die Fig. 3 zeigt die bereits auf die Rotorblattaußenhaut 6 aufgeklebte Grundplatte 33. Nach dem Aufkleben der Grundplatte 33 stehen die beiden Vortexgeneratoren 3 senkrecht von der Rotorblattaußenhaut 6 ab, um, wie oben beschrieben, jeweils den Auftrieb vergrößernde Luftwirbel zu erzeugen.

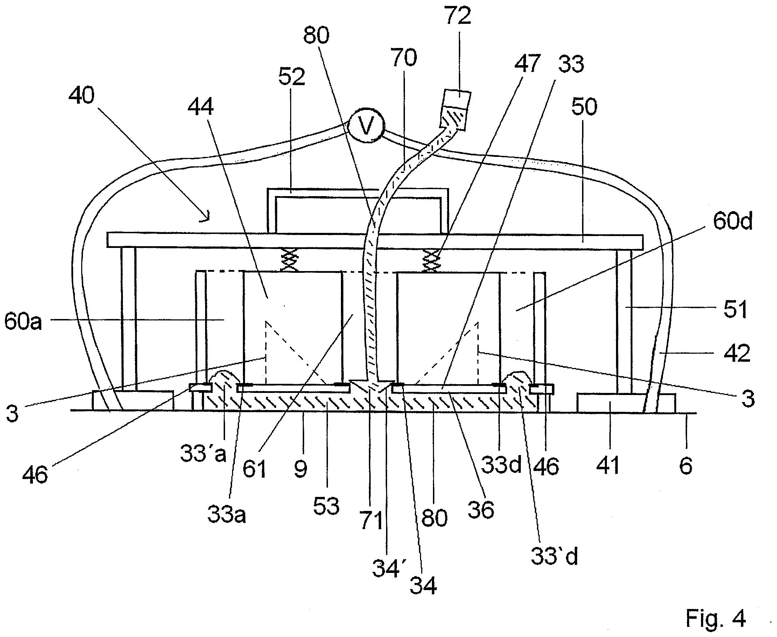

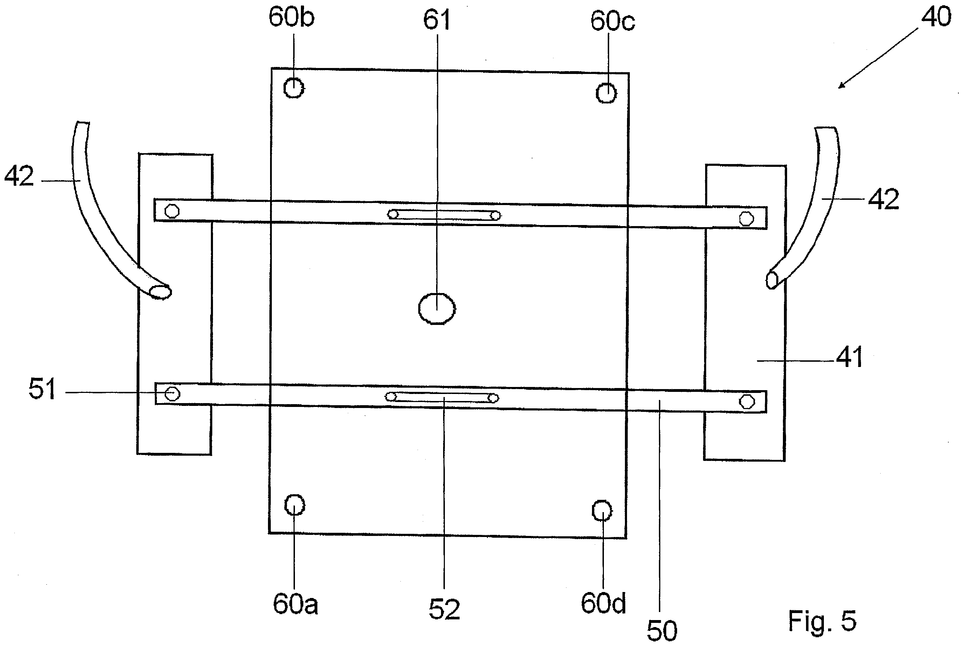

Die Fign. 4 und 5 zeigen ein erfindungsgemäßes Anpresswerkzeug 40, mit der die Grundplatte 33 erfindungsgemäß mit ihrer Klebefläche 36 auf die korrespondierende Klebefläche 9 der Rotorblattaußenhaut 6 sicher und fest aufklebbar ist.

Das Anpresswerkzeug 40 ist in Fig. 4 über der Grundplatte 33 mit den Vortexgeneratoren 3 übergreifend dargestellt. Das Anpresswerkzeug 40 weist zwei Ansaugpads 41 auf, von denen jeweils ein Vakuumschlauch 42 abgeht, der an der rotorblattseitigen Seite der Ansaugpads 41 einen Unterdruck erzeugt und dadurch die Ansaugpads 41 sicher und rutsch- und ablösefest auf der Rotorblattaußenhaut 6 vorübergehend ansaugt. Durch umgekehrtes Eindrücken von Luft durch die Vakuumschläuche 42 verlieren die Ansaugpads 41 natürlich sofort ihre Saugkraft, und das Anpresswerkzeug 40 lässt sich nach Beendigung des Verfahrens leicht wieder von der Rotorblattaußenhaut 6 entfernen.

Das Anpresswerkzeug 40 weist des Weiteren eine Anpresskuppel 44 auf. Die Anpresskuppel 44 weist in diesem Ausführungsbeispiel eine Innenhöhe auf, die größer ist als die höchste Höhe der aufgenommenen Vortexgeneratoren 3 über der Außenseite der Grundplatte 33. Darüber hinaus weist eine umlaufende Kante der Anpresskuppel 44, die als umlaufende Anpressfläche 46 dient, Abmessungen auf, die den Abmessungen des Umfanges der Grundplatte 33 angepasst sind. Ein Breitenabstand sich gegenüberliegender Abschnitte der umlaufenden Anpressfläche 46 ist etwa 1 cm geringer als die Breite der Grundplatte 33 ausgebildet, während ein Längenabstand zwischen sich gegenüberliegenden Abschnitten der umlaufenden Anpressfläche 46 ebenfalls etwas geringer, d. h. etwa 1 cm geringer als die Länge der Grundplatte 33 ausgebildet ist. Die Anpresskuppel 44 ist mit zwei Querstangen 50 ihnen gegenüber mittels einer Höhenverstellvorrichtung 47 höhenverstellbar verbunden. Die beiden Querstangen 50 sind über senkrechte Stangen 51 mit den beiden Ansaugpads 41 verbunden. Von jeder der Querstangen 50 geht jeweils ein Haltegriff 52 ab, mit denen das gesamte Anpresswerkzeug 40 verbringbar ist. Die Höhenverstellvorrichtung 47 zwischen Anpresskuppel 44 und Querstange 50 ermöglicht es, den Abstand der Anpresskuppel 44 zur Rotorblattaußenhaut 6 zu verändern und somit einen Anpressdruck des Anpresswerkzeugs 40 gegen die Grundplatte 33 zu verändern.

Die Grundplatte 33 liegt gemäß Fig. 4 nicht formschlüssig auf der Rotorblattaußenhaut 6 auf, sondern sie ist, wie in der Fig. 2b gezeigt, mittels des umlaufenden doppelseitigen Klebebandes 37 entlang der gesamten Klebefläche 36 um einen Spalt 53 beabstandet von der Rotorblattaußenhaut 6 angeordnet. Die Klebefläche 36 und die korrespondierende Klebefläche 9 weisen über ihre gesamte Ausdehnung einen im Wesentlichen gleichen Abstand voneinander auf, der einer Höhe des Spaltes 53 entspricht.

Die Anpresskuppel 44 weist vier Absenkungen 60a, 60b, 60c, 60d an ihren vier abgerundeten Ecken auf und eine zentrale Absenkung 61. Die Absenkungen 60a, 60b, 60c, 60d, 61 sind zur Grundplatte 33 hin geöffnet und geben bei richtiger Justierung der Anpresskuppel 44 über der Grundplatte 33 den Blick und den Durchgriff auf die Einlassöffnung 34' und die vier Auslassöffnungen 33'a, 33'b, 33'c, 33'd frei, d. h. die Einlassöffnung 34' kann durch die zentrale Absenkung 61 in der Anpresskuppel 44 bedient werden.

Fig. 4 zeigt einen Injektionsschlauch 70 mit einer Injektionsnase 71, die in die Einlassöffnung 34' eingesteckt ist. Der Injektionsschlauch 70 ist durch die zentrale Absenkung 61 der Anpresskuppel 44 hindurch in die Einlassöffnung 34' einsteckbar. Der Injektionsschlauch 70 weist an seinem der Injektionsnase 71 gegenüberliegenden Ende eine Pumpe 72 auf, mit der flüssiger Klebstoff 80 durch den Injektionsschlauch 70 und die Injektionsnase 71 in den Spalt 53 eingedrückt werden kann und auch eingedrückt wird. Es wird so viel flüssiger Klebstoff 80 in den Spalt 53 eingedrückt, bis aus allen vier Auslassöffnungen 33'a, 33'b, 33'c, 33'd zumindest etwas Klebstoff 80 herausquillt. Die Auslassöffnungen 33'a, 33'b, 33'c, 33'd sind ebenfalls über die vier Absenkungen 60a, 60b, 60c, 60d der Anpresskuppel 44 sichtbar, so dass visuell erkannt werden kann, wann der Spalt 53 vollständig mit Klebstoff 80 gefüllt ist.

In einer anderen, hier nicht dargestellten Variante des Anpresswerkzeugs 40 wird der Klebstoff 80 nicht mittels der Pumpe 72 eingedrückt, sondern an die vier Auslassöffnungen 33'a, 33'b, 33'c, 33'd wird jeweils ein Vakuumschlauch angeschlossen, und es wird ein Unterdruck durch eine Vakuumpumpe im Spalt 53 erzeugt. Durch Anschließen einer Injektionseinrichtung an der Einlassöffnung 34' wird flüssiger Klebstoff 80 durch das Vakuum homogen in den Spalt 53 eingesaugt und verteilt sich dort. Die Vakuumeinrichtung zur Erzeugung des Vakuums im Spalt 53 und die Vakuumeinrichtung zur Erzeugung des Unterdrucks der Saugpads 41 sind voneinander entkoppelt.

Fig. 5 zeigt das Anpresswerkzeug 40 der Fig. 4 in einer Draufsicht. Gleiche Bezugszeichen bedeuten hier gleiche Bauteile wie in Fig. 4. Zu erkennen sind die beiden horizontal verlaufenden Querstangen 50, an deren einem Ende das eine der beiden Saugpads 41 und an deren anderem Ende das andere der beiden Saugpads 41 über die vertikalen Stangen 51 angeordnet sind. Von jedem der beiden Saugpads 41 geht der Vakuumschlauch 42 ab. Die beiden Querstangen 50 sind mit den zwei Haltegriffen 52 versehen, die es ermöglichen, das gesamte Anpresswerkzeug 40 der Fig. 5 zu greifen und anzuheben und zu verbringen. Fig. 5 zeigt insbesondere die zentrale Absenkung 61 zur Einlassöffnung 34' hin und die vier Absenkungen 60a, 60b, 60c, 60d an den abgerundeten Ecken der Anpresskuppel 44 zu den vier Auslassöffnungen 33'a, 33'b, 33'c, 33'd hin. Durch die vier Absenkungen 60a, 60b, 60c, 60d hindurch sind die jeweiligen Auslassöffnungen 33'a, 33'b, 33'c, 33'd der Grundplatte 33 sichtbar, wenn das Anpresswerkzeug 40 justiert auf die Grundplatte 33 aufgesetzt ist. Das Anpresswerkzeug 40 ermöglicht es erfindungsgemäß, die Grundplatte 33 fest auf die korrespondierende Klebefläche 9 zu drücken und darüber hinaus den flüssigen Klebstoff 80 in sehr homogener Weise, ohne Einschließung von Luftblasen, in dem Spalt 53 zwischen Klebefläche 36 und korrespondierender Klebefläche 9 zu verteilen, um damit eine besonders feste und dauerhafte Klebverbindung herzustellen.

### Bezugszeichenliste

- 1: Rotorblatt
- 2: Abschnitt eines Rotorblattes
- 3: Vortexgenerator
- 4: Saugseite einer Rotorblattaußenhaut

- 6: Rotorblattaußenhaut
- 7: Rotorblatthinterkante
- 8: Rotorblattnase
- 9: korrespondierende Klebefläche

- 31: senkrecht abfallende Dreieckseite

- 33: Grundplatte
- 33a: Schutzbandabschnitt
- 33b: Schutzbandabschnitt
- 33c: Schutzbandabschnitt
- 33d: Schutzbandabschnitt
- 33'a: Auslassöffnung
- 33'b: Auslassöffnung
- 33'c: Auslassöffnung
- 33'd: Auslassöffnung

- 34: zentraler Schutzbandabschnitt
- 34': Einlassöffnung

- 36: Klebefläche
- 37: doppelseitiges Klebeband

- 40: Anpresswerkzeug
- 41: Ansaugpads
- 42: Vakuumleitung / -schlauch
- 44: Anpresskuppel
- 46: umlaufende Anpressfläche
- 47: Höhenverstellvorrichtung
- 50: Querstangen
- 51: senkrechte Stangen
- 52: Haltegriff
- 53: Spalt

- 60a: Absenkung der Anpresskuppel
- 60b: Absenkung der Anpresskuppel
- 60c: Absenkung der Anpresskuppel
- 60d: Absenkung der Anpresskuppel

- 61: zentrale Absenkung der Anpresskuppel

- 70: Injektionsschlauch
- 71: Injektionsnase
- 72: Pumpe

- 80: Klebstoff

- S: Luftstromrichtung

## Patentansprüche

1. Verfahren zur Befestigung eines Anbauteils (3, 33),
indem das Anbauteil (3, 33) mit einer Klebefläche (36) versehen wird,
ein Bauteil (1) mit einer korrespondierenden Klebefläche (9) versehen wird,
die Klebefläche (36) an die korrespondierende Klebefläche (9) gesetzt wird, ohne sich dabei vollständig zu berühren,
ein Spalt (53) zwischen der Klebefläche (36) und der korrespondierenden Klebefläche (9) ausgebildet wird,
das Anbauteil (3, 33) an die korrespondierende Klebefläche (9) gesetzt wird und das Anbauteil (3, 33) mit einer klebstoffleitenden Verbindung zu der korrespondierenden Klebefläche (9) versehen wird, gleichzeitig der Klebstoff (80) durch die klebstoffleitende Verbindung in den Spalt (53) injiziert wird und der Spalt (53) umlaufend klebstoffdicht abgeschlossen wird,
**dadurch gekennzeichnet, dass** das Anbauteil (3, 33) an einem Rotorblatt (1) befestigt wird und
ein Anpresswerkzeug (40) vorübergehend an dem Anbauteil (3, 33) angeordnet wird und sich an einer Außenwandung (6) des Bauteils (1) ansaugt und das Anbauteil (3, 33) an die Außenwandung (6) des Bauteils (1) drückt und in Form hält.

2. Verfahren nach Anspruch 1,
**dadurch gekennzeichnet, dass** auf die Klebefläche (36) umlaufend ein doppelseitiges Klebeband (37) aufgeklebt wird und das mit dem doppelseitigen Klebeband (37) versehene Anbauteil (3, 33) auf die korrespondierende Klebefläche (9) angesetzt wird und sich durch eine Klebeverbindung zwischen Klebefläche (36) und korrespondierender Klebefläche (9) eine klebstoffdichte Dichtung ausbildet, die den Spalt (53) umlaufend abschließt.

3. Verfahren nach einem der Ansprüche 1 oder 2,
**dadurch gekennzeichnet, dass** in das Anbauteil (3, 33) wenigstens eine Ein- und wenigstens eine Auslassöffnung (34', 33'a, 33'b, 33'c, 33'd) eingebracht werden, die mit der Klebefläche (36) eine klebstoffleitende Verbindung ausbilden.

4. Verfahren nach Anspruch 3,
**dadurch gekennzeichnet, dass** der Klebefläche (36) gegenüberliegende Bereiche um die wenigstens eine Auslassöffnung (33'a, 33'b, 33'c, 33'd) herum mit einem Schutzband (33a, 33b, 33c, 33d) abgedeckt werden und die wenigstens eine Auslassöffnung (33'a, 33'b, 33'c, 33'd) durch das jeweilige Schutzband (33a, 33b, 33c, 33d) hindurch in das Anbauteil (3, 33) eingebracht wird.

5. Verfahren nach Anspruch 4,
**dadurch gekennzeichnet, dass** die Schutzbänder (33a, 33b, 33c, 33d) überschüssigen, in den Spalt (53) eingebrachten und aus der wenigstens einen Auslassöffnung (33'a, 33'b, 33'c, 33'd) austretenden Klebstoff (80) an einem Kontakt mit der Außenwandung des Anbauteils (3, 33) hindern und nach dem Einbringen des Klebstoffs (80) von der Außenwandung wieder abgezogen werden.

6. Verfahren nach Anspruch 1,
**dadurch gekennzeichnet, dass** das Anpresswerkzeug (40) das Anbauteil (3, 33) an dessen umlaufendem Rand berührt und den umlaufenden Rand an die korrespondierende Klebefläche (9) drückt.

7. Verfahren nach einem der Ansprüche 3 bis 5,
**dadurch gekennzeichnet, dass** durch die wenigstens eine Einlassöffnung (34') Klebstoff (80) in den Spalt (53) eingepresst wird.

8. Verfahren nach einem der Ansprüche 3 bis 5 oder 7,
**dadurch gekennzeichnet, dass** durch wenigstens eine der Auslassöffnungen (33'a, 33'b, 33'c, 33'd) ein Unterdruck in dem Spalt (53) erzeugt wird und durch die Einlassöffnungen (34') Klebstoff (80) in den Spalt (53) injiziert wird.

9. Verfahren nach einem der vorstehenden Ansprüche,
**dadurch gekennzeichnet, dass** die Klebefläche (36) und die korrespondierende Klebefläche (9) aufgeraut und/oder gereinigt werden.

10. Montagevorrichtung mit
einem Anpresswerkzeug (40) für ein Anbauteil (3, 33) mit einer Klebefläche (36) an eine korrespondierende Klebefläche (9) eines
Rotorblattes (1),
mit wenigstens einer Ansaugeinrichtung (41), mit der das Anpresswerkzeug (40) an einer Wandung des Bauteils (1) vorübergehend ansaugbar ist, und
mit dem das Anbauteil (3, 33) unter Ausbildung eines Spaltes (53) zwischen der Klebefläche (36) und der korrespondierenden Klebefläche (9) an die korrespondierende Klebefläche (9) abgedichtet drückbar ist, und
einer Injektionseinrichtung zum Einbringen von Klebstoff (80) in den Spalt (53) zwischen der Klebefläche (36) und der korrespondierenden Klebefläche (9).

11. Montagevorrichtung nach Anspruch 10,
**dadurch gekennzeichnet, dass** das Anpresswerkzeug (40) wenigstens ein Saugpad (41) aufweist.

12. Montagevorrichtung nach Anspruch 11,
**dadurch gekennzeichnet, dass** von dem wenigstens einen Saugpad (41) ein Gestänge (50, 51) abgeht und auf einer Saugpadseite des Gestänges (50, 51) das Anpresswerkzeug (40) für das Anbauteil (3, 33) vorgesehen ist,

13. Montagevorrichtung nach einem der Ansprüche 11 oder 12,
**dadurch gekennzeichnet, dass** das Anpresswerkzeug (40) eine Anpresskuppel (44) mit einer umlaufenden Anpressfläche (46) aufweist

14. Montagevorrichtung nach Anspruch 13,
**gekennzeichnet durch** wenigstens eine Absenkung (60a, 60b, 60c, 60d) in der Anpresskuppel (44), die bis auf Höhe der umlaufenden Anpressfläche (46) abgesenkt ist und dort offen ist und die eine Betätigung an dem angedrückten Anbauteil (3, 33) ermöglicht.

15. Montagevorrichtung nach einem der Ansprüche 10 bis 14,
**dadurch gekennzeichnet, dass** das Anpresswerkzeug (40) höhenverstellbar zu den Saugpads (41) ausgebildet ist.

16. Montagevorrichtung nach einem der Ansprüche 10 bis 15,
**dadurch gekennzeichnet, dass** die Injektionseinrichtung eine Injektionsnase (71) zum Anschluss für die wenigstens eine Einlassöffnung (34') des Anbauteils (3, 33) aufweist.

17. Montagevorrichtung nach Anspruch 16,
**dadurch gekennzeichnet, dass** die Injektionsnase (71) durch eine der Absenkungen (60a, 60b, 60c, 60d) der Anpresskuppel (44) an die Einlassöffnung (34') anschließbar ist.

18. Montagevorrichtung nach einem der Ansprüche 10 bis 17,
**dadurch gekennzeichnet, dass** die Injektionseinrichtung eine Vakuumpumpe aufweist, die an allen Auslassöffnungen (33'a, 33'b, 33'c, 33'd) am Anbauteil (3, 33) anschließbar ist und die einen Unterdruck im Spalt (53) erzeugt.

## Claims

1. A method for mounting an attachment (3, 33),
the attachment (3, 33) being provided with an adhesion surface (36),
a component (1) being provided with a corresponding adhesion surface (9), the adhesion surface (36) being placed on the corresponding adhesion surface (9) without making complete contact with each other in the process, a gap (53) being formed between the adhesion surface (36) and the corresponding adhesion surface (9),
the attachment (3, 33) being pressed against the corresponding adhesion surface (9) and the attachment (3, 33) being provided with an adhesive-conveying connection to the corresponding adhesion surface (9), at the same time the adhesive (80) being injected into the gap (53) through the adhesive-conveying connection and the gap (53) being closed off circumferentially in an adhesive-tight manner,
**characterized in that** the attachment (3, 33) is mounted to a rotor blade (1) and
a pressing tool (40) is arranged temporarily on the attachment (3, 33) and suctions onto an outer wall (6) of the component (1) and presses the attachment (3, 33) against the outer wall (6) of the component (1) and holds the attachment (3, 33) in shape.

2. The method as claimed in claim 1,
**characterized in that** a double-sided adhesive strip (37) is stuck circumferentially onto the adhesion surface (36) and the attachment (3, 33) provided with the double-sided adhesive strip (37) is placed onto the corresponding adhesion surface (9) and, by means of an adhesively-bonded connection between the adhesion surface (36) and the corresponding adhesion surface (9), there forms an adhesive-tight seal which closes off the gap (53) circumferentially.

3. The method as claimed in one of claims 1 or 2,
**characterized in that** at least one inlet opening and at least one outlet opening (34', 33'a, 33'b, 33'c, 33'd) are introduced into the attachment (3, 33), which openings form with the adhesion surface (36) an adhesive-conveying connection.

4. The method as claimed in claim 3,
**characterized in that** regions which lie opposite the adhesion surface (36) around the at least one outlet opening (33'a, 33'b, 33'c, 33'd) are covered with a protective strip (33a, 33b, 33c, 33d) and the at least one outlet opening (33'a, 33'b, 33'c, 33'd) is introduced into the attachment (3, 33) through the respective protective strip (33a, 33b, 33c, 33d).

5. The method as claimed in claim 4,
**characterized in that** the protective strips (33a, 33b, 33c, 33d) prevent excess adhesive (80), which has been introduced into the gap (53) and issues forth from the at least one outlet opening (33'a, 33'b, 33'c, 33'd), from coming into contact with the outer wall of the attachment (3, 33), and are removed anew from the outer wall after the introduction of the adhesive (80).

6. The method as claimed in claim 1,
**characterized in that** in the pressing tool (40) is in contact with the attachment (3, 33) on the circumferential edge of the latter and presses the circumferential edge against the corresponding adhesion surface (9).

7. The method as claimed in one of claims 3 to 5,
**characterized in that** adhesive (80) is pressed into the gap (53) through the at least one inlet opening (34').

8. The method as claimed in one of claims 3 to 5 or 7,
**characterized in that** a vacuum is produced in the gap (53) via at least one of the outlet openings (33'a, 33'b, 33'c, 33'd) and adhesive (80) is injected into the gap (53) through the inlet openings (34').

9. The method as claimed in one of the preceding claims,
**characterized in that** the adhesion surface (36) and the corresponding adhesion surface (9) are roughened and/or cleaned.

10. A mounting apparatus with
a pressing tool (40) for an attachment (3, 33) having an adhesion surface (36) against a corresponding adhesion surface (9) of a rotor blade (1),
having at least one suction device (41) by means of which the pressing tool (40) can be temporarily suctioned onto a wall of the component (1), and by means of which the attachment (3, 33) can be pressed in a sealed manner, forming a gap (53) between the adhesion surface (36) and the corresponding adhesion surface (9), against the corresponding adhesion surface (9), and
an injection device for injecting adhesive (80) into the gap (53) between the adhesion surface (36) and the corresponding adhesion surface (9).

11. The mounting apparatus as claimed in claim 10,
**characterized in that** the pressing tool (40) has at least one suction pad (41).

12. The mounting apparatus as claimed in claim 11,
**characterized in that** a rod assembly (50, 51) extends from the at least one suction pad (41) and the pressing tool (40) for the attachment (3, 33) is provided on a suction pad-side of the rod assembly (50, 51).

13. The mounting apparatus as claimed in one of claims 11 or 12,
**characterized in that** the pressing tool (40) has a pressing dome (44) with a circumferential pressing surface (46).

14. The mounting apparatus as claimed in claim 13,
**characterized by** at least one depression (60a, 60b, 60c, 60d) in the pressing dome (44), which is sunk to the height of the circumferential pressing surface (46) and which is open there and which permits actuation on the pressed attachment (3, 33).

15. The mounting apparatus as claimed in one of claims 10 to 14,
**characterized in that** the pressing tool (40) is made height-adjustable with respect to the suction pads (41).

16. The mounting apparatus as claimed in one of claims 10 to 15,
**characterized in that** the injection device has an injection nozzle (71) for connecting to the at least one inlet opening (34') of the attachment (3, 33).

17. The mounting apparatus as claimed in claim 16,
**characterized in that** the injection nozzle (71) can be connected to the inlet opening (34') via one of the depressions (60a, 60b, 60c, 60d) of the pressing dome (44).

18. The mounting apparatus as claimed in one of claims 10 to 17,
**characterized in that** the injection device has a vacuum pump which can be connected to all of the outlet openings (33'a, 33'b, 33'c, 33'd) on the attachment (3, 33), and which generates a vacuum in the gap (53).

## Revendications

1. Procédé pour la fixation d'une pièce rapportée (3, 33), la pièce rapportée (3, 33) étant pourvue d'une surface adhésive (36), un élément de construction (1) étant pourvu d'une surface adhésive correspondante (36), la surface adhésive (36) étant posée sur la surface adhésive correspondante (9) sans qu'elles se touchent entièrement, une fente (53) étant configurée entre la surface adhésive (36) et la surface adhésive correspondante (9), la pièce rapportée (3, 33) étant posée sur la surface adhésive correspondante (9) et la pièce rapportée (3, 33) étant pourvue d'un raccord conducteur d'adhésif en direction de la surface adhésive correspondante (9), l'adhésif (80) étant simultanément injecté dans la fente (53) par le raccord conducteur d'adhésif et la fente (53) étant terminée tout autour en étant étanche à l'adhésif, **caractérisé en ce que** la pièce rapportée (3, 33) est fixée à une pale de rotor (1) et qu'un outil d'application de pression (40) est placé provisoirement contre la pièce rapportée (3, 33) et se colle par succion sur une paroi extérieure (6) de l'élément de construction (1) et presse la pièce rapportée (3, 33) contre la paroi extérieure (6) de l'élément de construction (1) et la maintient en forme.

2. Procédé selon la revendication 1, **caractérisé en ce qu'**une bande adhésive des deux côtés (37) est collée sur le pourtour de la surface adhésive (36) et que la pièce rapportée (3, 33) pourvue de la bande adhésive des deux côtés est appliquée sur la surface correspondante (9) et qu'un joint étanche à la colle se forme par un assemblage collé entre la surface adhésive (36) et la surface adhésive correspondante (9) qui ferme la fente (53) sur son pourtour.

3. Procédé selon l'une des revendications 1 ou 2, **caractérisé en ce qu'**au moins une ouverture d'entrée et au moins une ouverture de sortie (34', 33'a, 33'b, 33'c, 33'd) qui forment un assemblage conducteur de colle avec la surface adhésive (36) sont ménagées dans la pièce rapportée (3, 33).

4. Procédé selon la revendication 3, **caractérisé en ce que** des zones opposées à la surface adhésive (36) autour de la au moins une ouverture de sortie (33'a, 33'b, 33'c, 33'd) sont recouvertes d'une bande de protection (33a, 33b, 33c, 33d) et que la au moins une ouverture de sortie (33'a, 33'b, 33'c, 33'd) est introduite dans la pièce rapportée (3, 33) en traversant la bande de protection respective (33a, 33b, 33c, 33d).

5. Procédé selon la revendication 4, **caractérisé en ce que** les bandes de protection (33a, 33b, 33c, 33d) empêchent l'excès de colle (80) introduit dans la fente (53) et sortant de la au moins une ouverture de sortie (33'a, 33'b, 33'c, 33'd) d'être en contact avec la paroi extérieure de la pièce rapportée (3, 33) et sont retirées à nouveau de la paroi extérieure après avoir introduit la colle (80).

6. Procédé selon la revendication 1, **caractérisé en ce que** l'outil d'application de pression (40) touche la pièce rapportée sur son bord périphérique et appuie le bord périphérique sur la surface adhésive correspondante (9).

7. Procédé selon l'une des revendications 3 à 5, **caractérisé en ce que** de la colle (80) est enfoncée dans la fente (53) à travers la au moins une ouverture d'entrée (34').

8. Procédé selon l'une des revendications 3 à 5 ou 7, **caractérisé en ce qu'**une dépression est générée dans la fente (53) par au moins l'une des ouvertures de sortie (33'a, 33'b, 33'c, 33'd) et que de la colle (80) est injecté dans la fente (53) par les ouvertures d'entrée (34').

9. Procédé selon l'une des revendications précédentes, **caractérisé en ce que** la surface adhésive (36) et la surface adhésive correspondante (9) sont rendues rugueuses et/ou nettoyées.

10. Dispositif de montage avec un outil d'application de pression (40) pour une pièce rapportée (3, 33) avec une surface adhésive (36) sur une surface adhésive correspondante (36) d'une pale de rotor
(1),
avec au moins un dispositif de succion (41) avec lequel l'outil d'application de pression (40) peut être temporairement appliqué par succion sur une paroi de la pièce de construction (1) et avec lequel la pièce rapportée (3, 33) peut être appuyée contre la surface adhésive correspondante (9) de manière étanche en formant une fente (53) entre la surface adhésive (36) et la surface adhésive correspondante (9) et
un dispositif d'injection pour injecter de la colle (80) dans la fente (53) entre la surface adhésive (36) et la surface adhésive correspondante (9).

11. Dispositif de montage selon la revendication 10, **caractérisé en ce que** l'outil d'application de pression (40) présente au moins une ventouse (41).

12. Dispositif de montage selon la revendication 11, **caractérisé en ce que** des tringles (50, 51) partent de la au moins une ventouse (41) et que l'outil d'application de pression (40) est prévu sur un côté ventouse des tringles (50, 51).

13. Dispositif de montage selon l'une des revendications 11 ou 12, **caractérisé en ce que** l'outil d'application de pression (40) présente une coupole d'application de pression (44) avec une surface d'application de pression périphérique (46).

14. Dispositif de montage selon la revendication 13, **caractérisé par** au moins un abaissement (60a, 60b, 60c, 60d) dans la coupole d'application de pression (44) qui est abaissé à la hauteur de la surface d'application de pression périphérique (46) et qui y est ouverte et qui permet un actionnement sur la pièce rapportée appuyée (3, 33).

15. Dispositif de montage selon l'une des revendications 10 à 14, **caractérisé en ce que** l'outil d'application de pression (40) est configuré réglable en hauteur par rapport aux ventouses (41).

16. Dispositif de montage selon l'une des revendications 10 à 15, **caractérisé en ce que** le dispositif d'injection présente un ergot d'injection (71) pour le raccord pour la au moins une ouverture d'entrée (34') de la pièce rapportée (3, 33).

17. Dispositif de montage selon la revendication 16, **caractérisé en ce que** l'ergot d'injection (71) peut être raccordé à l'ouverture d'entrée (34') par l'un des abaissements (60a, 60b, 60c, 60d) de la coupole d'application de pression (44).

18. Dispositif de montage selon l'une des revendications 10 à 17, **caractérisé en ce que** le dispositif d'injection présente une pompe à vide qui peut être raccordée à toutes les ouvertures de sortie (33'a, 33'b, 33'c, 33'd) sur la pièce rapportée (3, 33) et qui génère une dépression dans la fente (53).
